# EUROPÄISCHE PATENTSCHRIFT

(11) **EP 3 130 528 B1**
(45) Veröffentlichungstag und Bekanntmachung des Hinweises auf die Patenterteilung: **04.07.2018**
(21) Anmeldenummer: 16001657.2
(22) Anmeldetag: 27.07.2016
(51) Int. Cl.: B62D 25/16, B62D 35/00, B60R 3/00

(54) **SEITENVERKLEIDUNGSEINRICHTUNG FÜR EIN NUTZFAHRZEUG**
SIDE COVERING DEVICE FOR A COMMERCIAL VEHICLE
ENSEMBLE DEHABILLAGE LATERAL POUR UN VEHICULE UTILITAIRE

(30) Priorität: 14.08.2015 DE 102015010657
(43) Veröffentlichungstag der Anmeldung: 15.02.2017
(73) Patentinhaber: MAN Truck & Bus AG, 80995 München (DE)
(72) Erfinder: Marx, Manuel, 85258 Weichs (DE); Marx, Stefan, 82290 Landsberied (DE); Löffler, Martin, 80997 München (DE); Weissbrodt, Olaf, 80992 München (DE); Foscari, Nicola, 80939 München (DE)
(74) Vertreter: v. Bezold & Partner Patentanwälte - PartG mbB

(56) Entgegenhaltungen:
- EP-A1- 0 619 217
- US-A- 5 947 520
- US-A1- 2007 187 941
- US-A1- 2014 252 798
- US-B1- 8 814 253

## Beschreibung

Die Erfindung betrifft eine Seitenverkleidungseinrichtung zur Montage an ein Nutzfahrzeug, vorzugsweise einen Lastkraftwagen, insbesondere eine Sattelzugmaschine.

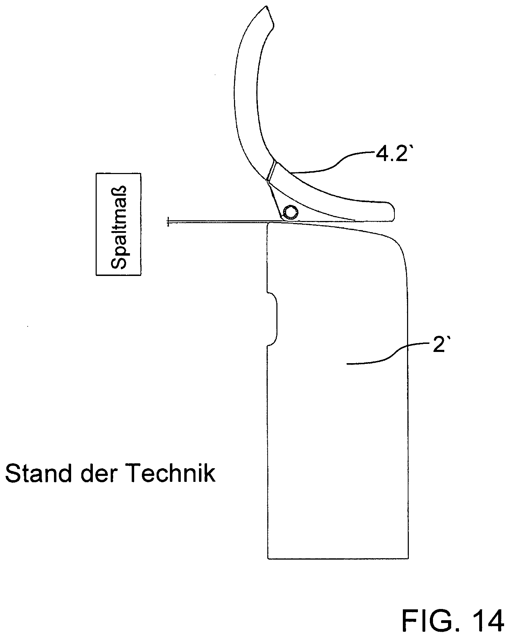

Figur 14 zeigt einen Teil einer aus der Praxis bekannten Seitenverkleidungseinrichtung für eine Sattelzugmaschine. Die Seitenverkleidungseinrichtung umfasst ein Seitenverkleidungselement 2' und einen hinteren Kotflügel mit seitlicher Kotflügelblende 4.2'. Das Seitenverkleidungselement 2' und der hintere Kotflügel mit der Kotflügelblende 4.2' sind voneinander getrennte Einzelbauteile. Nachteilhaft daran ist, dass zwischen dem Seitenverkleidungselement 2' und dem hinteren Kotflügel, insbesondere dessen Kotflügelblende 4.2' einzuhaltende Spaltmaß, insbesondere die hierfür erforderliche Einstellvorrichtung zur Einhaltung des Spaltmaßes. Zum Stand der Technik kann ferner auf die EP 0 619 217 A1 verwiesen werden und auf die US 2014/252798 A1, die eine Seitenverkleidungseinrichtung gemäß dem Oberbegriff des Anspruchs 1 offenbart.

Eine Aufgabe der Erfindung ist es, eine Möglichkeit zu schaffen, mittels der das Problem des Spaltmaßes überwunden werden kann.

Diese Aufgabe wird mit den Merkmalen des Hauptanspruchs gelöst. Vorteilhafte Weiterbildungen der Erfindung können den Unteransprüchen und der folgenden Beschreibung bevorzugter Ausführungsformen der Erfindung entnommen werden.

Die Erfindung schafft eine Seitenverkleidungseinrichtung zur Montage an ein Nutzfahrzeug, vorzugsweise einen Lastkraftwagen, insbesondere eine Sattelzugmaschine, gemäß Anspruch 1. Die Seitenverkleidungseinrichtung umfasst ein Seitenverkleidungselement, zweckmäßig zur Anordnung zwischen ein Vorderrad und ein Hinterrad des Nutzfahrzeugs, und eine Montageeinrichtung zur Montage des Seitenverkleidungselements an das Nutzfahrzeug.

Das Seitenverkleidungselement zeichnet sich insbesondere dadurch aus, dass in das Seitenverkleidungselement zumindest eine zweckmäßig seitliche Kotflügelblende (z. B. Kotflügelschürze) für eine Kotflügeleinrichtung (z. B. Radkasten, etc.) des Nutzfahrzeugs integriert ist, so dass insbesondere das Seitenverkleidungselement selbst die zumindest eine Kotflügelblende ausbildet.

Die zumindest eine Kotflügelblende ist folglich zweckmäßig einstückig-integraler Teil des Seitenverkleidungselements und/oder hierzu kein separates Bauteil.

Dadurch, dass die zumindest eine Kotflügelblende in das Seitenverkleidungselement integriert ist, erfolgt der Übergang zwischen dem Seitenverkleidungselement und dessen Kotflügelblende zwischenspaltfrei, so dass zweckmäßig das Erfordernis der maßlichen Einhaltung des Zwischenspalts und der hierfür benötigen Einsteilleinrichtung entfallen kann. Ebenfalls können dadurch seitlich sichtbare Fugen bzw. Spalte reduziert oder vermieden werden.

Es ist möglich, dass in das Seitenverkleidungselement eine vordere Kotflügelblende für eine vordere Kotflügeleinrichtung des Nutzfahrzeugs integriert ist und/oder eine hintere Kotflügelblende für eine hintere Kotflügeleinrichtung des Nutzfahrzeugs integriert ist, so dass insbesondere das Seitenverkleidungselement selbst die vordere Kotflügelblende und/oder die hintere Kotflügelblende ausbildet.

Die vordere Kotflügelblende dient folglich zweckmäßig zur Ergänzung der vorderen Kotflügeleinrichtung.

Die hintere Kotflügelblende dient folglich zweckmäßig zur Ergänzung der hinteren Kotflügeleinrichtung.

Das Seitenverkleidungselement erstreckt sich als zweckmäßig einstückiges Bauteil von der vorderen Kotflügelblende bis zur hinteren Kotflügelblende und stellt somit insbesondere eine Seitenvollverkleidung dar.

Das Seitenverkleidungselement kann eine oder mehrere Trittstufenöffnungen aufweisen.

Es ist möglich, dass das Seitenverkleidungselement ein vorderes Innenelement, z. B. eine Innenschale, umfasst, das von dem Seitenverkleidungselement nach innen absteht und zur Ausbildung einer Abdichtkulisse dient, vorzugsweise mittels Überlappung mit der vorderen Kotflügeleinrichtung des Nutzfahrzeugs. Alternativ oder ergänzend kann das Seitenverkleidungselement ein hinteres Innenelement, z. B. eine Innenschale, umfassen, das von dem Seitenverkleidungselement nach innen absteht und ebenfalls zur Ausbildung einer Abdichtkulisse dient, vorzugsweise mittels Überlappung mit der hinteren Kotflügeleinrichtung des Nutzfahrzeugs. Die Abdichtkulisse dient zweckmäßig zur Abdichtung gegen Schmutz und/oder Wasser von einem Nutzfahrzeugreifen.

Die Abdichtkulisse kann insbesondere so gestaltet sein, dass sie die Verordnung (EU) Nr. 109/2011 für Spritzschutzsysteme erfüllt.

Das vordere und/oder hintere Innenelement können zweckmäßig an das Seitenverkleidungselement montiert sein.

Es ist möglich, dass das vordere Innenelement zusammen mit dem Seitenverkleidungselement eine vorzugsweise in Umfangsrichtung geschlossene Hohlraumkonstruktion bildet und/oder das hintere Innenelement zusammen mit dem Seitenverkleidungselement eine vorzugsweise in Umfangsrichtung geschlossene Hohlraumkonstruktion bildet.

Es ist möglich, dass eine zweckmäßig hintere Stirnkante der hinteren Kotflügelblende konkav und/oder bogenförmig verläuft, insbesondere um sich zweckmäßig einer Reifen-/Radform des Nutzfahrzeugs anzupassen.

Die Seitenverkleidungseinrichtung kann zweckmäßig die hintere Kotflügeleinrichtung mit umfassen. Die hintere Kotflügeleinrichtung kann, vorzugsweise in einem oberen, hinteren Bereich, einen eigenen und somit zweckmäßig integrierten Kotflügelblendenstummel (z. B. Kotflügelschürzenstummel) aufweisen. Alternativ oder ergänzend kann die hintere Kotflügeleinrichtung in einem vorderen, unteren Seitenbereich kotflügelblendenfrei ausgeführt sein.

Es ist möglich, dass die hintere Kotflügelblende des Seitenverkleidungselements und der Kotflügelblendenstummel der hinteren Kotflügeleinrichtung sich abschnittsweise überlappen, so dass vorzugsweise die hintere Kotflügelblende des Seitenverkleidungselements den Kotflügelblendenstummel der hinteren Kotflügeleinrichtung verlängert und somit vorzugsweise nach unten vervollständigt.

Der Kotflügelblendenstummel kann von seitlich außen nach seitlich innen verlaufen, so dass insbesondere Raum für die hintere Kotflügelblende geschaffen wird, vorzugsweise für einen oberen zweckmäßig reduzierten Eckbereich der hinteren Kotflügelblende.

Dadurch kann z. B. ermöglicht werden, dass eine Außenfläche der hinteren Kotflügelblende des Seitenverkleidungselements relativ zu einer Außenfläche des Kotflügelblendenstummels der hinteren Kotflügeleinrichtung im Wesentlichen bündig ausrichtbar ist.

Es ist ebenfalls möglich, dass eine zweckmäßig hintere Stirnkante der hinteren Kotflügelblende des Seitenverkleidungselements relativ zu einer zweckmäßig hinteren Stirnkante des Kotflügelblendenstummels der hinteren Kotflügeleinrichtung im Wesentlichen bündig ausrichtbar ist.

Es ist möglich, dass die hintere Kotflügeleinrichtung ein vorderes Kotflügelelement (z. B. Kotflügelviertelschale) zur Montage an ein dahinter angeordnetes Kotflügelelement eines insbesondere mehrteiligen hinteren Kotflügelaufbaus darstellt. Der hintere Kotflügelaufbau kann z. B. das vordere Kotflügelelement, ein mittleres Kotflügelelement und ein hinteres Kotflügelelement umfassen.

Es ist möglich, dass ein oberer Eckbereich der hinteren Kotflügelblende des Seitenverkleidungselements reduziert ist, z. B. abgeschrägt ist.

Die hintere Kotflügelblende des Seitenverkleidungselements erstreckt sich zweckmäßig von einem oberen Eckbereich durchgehend bis zu einem unteren Eckbereich des Seitenverkleidungselements.

Die Montageeinrichtung zur Montage des Seitenverkleidungselements dient vorzugsweise zusätzlich zur Montage der hinteren Kotflügeleinrichtung. Die Montageeinrichtung bildet somit zweckmäßig eine Kombihalterung für das Seitenverkleidungselement und die hintere Kotflügeleinrichtung.

Die Montageeinrichtung umfasst eine Lagerkonstruktion (z. B. Montageflansch, Schmiedeflansch, Montageplatte, Montageblock, etc.) umfassen und einen an der Lagerkonstruktion z. B. durch Reibschweißen montierbaren Querträger zur Halterung des Seitenverkleidungselements und der hinteren Kotflügeleinrichtung. Die Lagerkonstruktion umfasst zumindest zwei in Höhenrichtung voneinander beabstandete Anbringformationen (z. B. realisierbar durch eine Langlochkonstruktion, zumindest zwei Aussparungen oder eine andere geeignete Anbringstruktur) für den Querträger, nämlich eine obere Anbringformation und eine untere Anbringformation, so dass der Querträger mit der hinteren Kotflügeleinrichtung höhenvariabel an der Lagerkonstruktion halterbar ist, allerdings das Seitenverkleidungselement vorzugsweise höhenkonstant mittels der Montageeinrichtung gehaltert bleibt.

Die hintere Kotflügelblende des Seitenverkleidungselements und der Kotflügelblendenstummel der hinteren Kotflügeleinrichtung können sich zweckmäßig abschnittsweise überlappen, unabhängig davon, ob die Montage des Querträgers mit der hinteren Kotflügeleinrichtung an die untere Anbringformation oder die obere Anbringformation erfolgt.

Dadurch wird ermöglicht, dass die hintere Kotflügeleinrichtung und somit der hintere Kotflügelaufbau in Höhenrichtung variabel verbaubar ist, insbesondere für verschiedene Radgrößen und/oder Sattelkupplungshöhen.

Zu erwähnen ist, dass der vordere und/oder hintere Kotflügel bzw. Kotflügelaufbau wie üblich ebenfalls eine z. B. gekrümmte Grundstruktur zum zumindest bereichsweisen Überspannen einer Radlauffläche aufweisen kann, zuzüglich der Kotflügelblende(n) und/oder dem Kotflügelblendenstummel, wie hierin offenbart.

Zu erwähnen ist noch, dass die Seitenverkleidungseinrichtung eine Schwenkeinrichtung zum Auf- und Zuklappen des Seitenverkleidungselements aufweisen kann.

Die Erfindung ist nicht auf eine Seitenverkleidungseinrichtung beschränkt, sondern umfasst ebenfalls ein Nutzfahrzeug, vorzugsweise einen Lastkraftwagen, insbesondere eine Sattelzugmaschine, mit zumindest einer Seitenverkleidungseinrichtung wie hierin offenbart.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Seitenansicht einer Seitenverkleidungseinrichtung gemäß einer Ausführungsform der Erfindung,
- Figur 2: zeigt eine perspektivische Ansicht der Seitenverkleidungseinrichtung,
- Figur 3: zeigt eine perspektivische Ansicht eines hinteren Teils der Seitenverkleidungseinrichtung,
- Figur 4: zeigt eine Draufsicht von oben auf die Seitenverkleidungseinrichtung,
- Figur 5: zeigt eine Seitenansicht der Seitenverkleidungseinrichtung,
- Figur 6: zeigt eine Seitenansicht der Seitenverkleidungseinrichtung,
- Figur 7: zeigt eine Schnittansicht entlang der Linie A-A der Figur 6,
- Figur 8: zeigt eine Schnittansicht entlang der Linie B-B der Figur 6,
- Figur 9: zeigt eine perspektivische Ansicht einer Montageeinrichtung mit einem Seitenverkleidungselement und einer hinteren Kotflügeleinrichtung der Seitenverkleidungseinrichtung,
- Figur 10: zeigt eine perspektivische Ansicht der Montageeinrichtung der Seitenverkleidungseinrichtung,
- Figur 11: zeigt eine perspektivische Ansicht einer hinteren Kotflügeleinrichtung der Seitenverkleidungseinrichtung,
- Figur 12: zeigt eine Detailansicht des Übergangsbereichs zwischen dem Seitenverkleidungselement und der hinteren Kotflügeleinrichtung der Seitenverkleidungseinrichtung in einer ersten Höhenposition,
- Figur 13: zeigt eine Detailansicht des Übergangsbereichs zwischen dem Seitenverkleidungselement und der hinteren Kotflügeleinrichtung der Seitenverkleidungseinrichtung in einer zweiten Höhenposition, und
- Figur 14: zeigt eine Seitenansicht eines Seitenverkleidungselements und einer hinteren Kotflügeleinrichtung gemäß Stand der Technik.

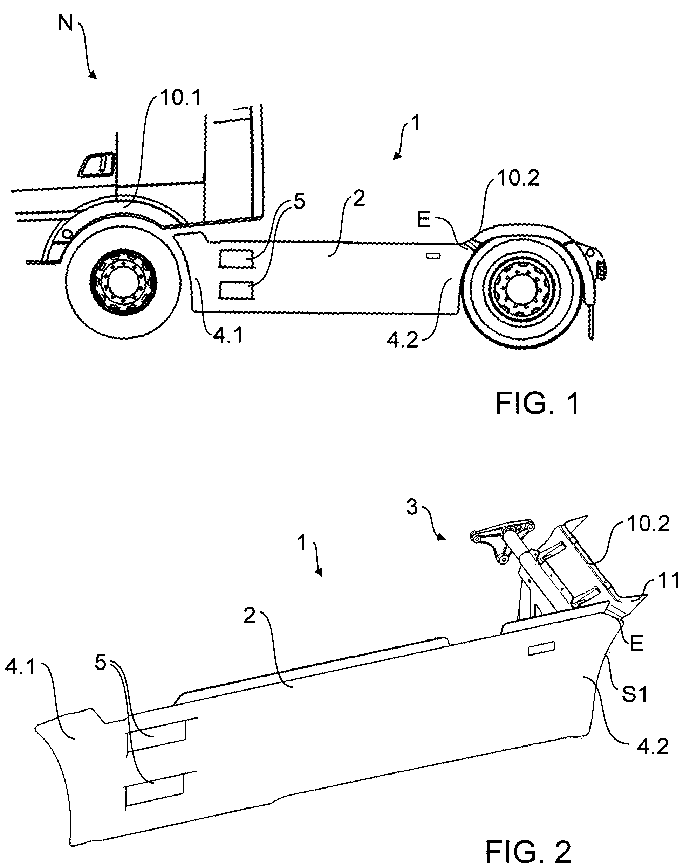

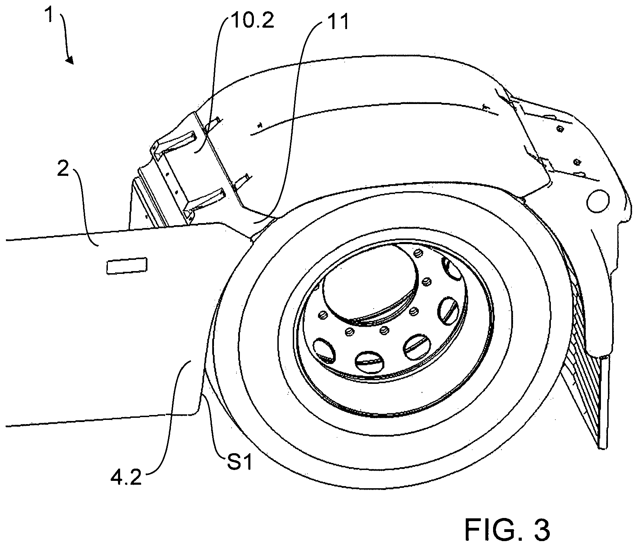

Figur 1 zeigt eine Seitenansicht eines Nutzfahrzeugs N, insbesondere einer Sattelzugmaschine, mit einer Seitenverkleidungseinrichtung 1 gemäß einer Ausführungsform der Erfindung, während die Figuren 2 und 3 unterschiedliche perspektivische Ansichten der Seitenverkleidungseinrichtung 1 zeigen.

Das Nutzfahrzeug N umfasst eine vordere Kotflügeleinrichtung 10.1 (z. B. Radkasten) zum bereichsweisen Überspannen einer Radlauffläche eines vorderen Rads des Nutzfahrzeugs N und eine hintere Kotflügeleinrichtung 10.2 (z. B. Radkasten) zum bereichsweisen Überspannen einer Radlauffläche eines hinteren Rads des Nutzfahrzeugs N.

Ein Seitenverkleidungselement 2 erstreckt sich zwischen der vorderen Kotflügeleinrichtung 10.1 und der hinteren Kotflügeleinrichtung 10.2 und dient zur Verbesserung der aerodynamischen Umströmung des Nutzfahrzeugs N und zur seitlichen Verkleidung von Nutzfahrzeug-Anbauteilen (z. B. Tank, etc.).

In das Seitenverkleidungselement 2 ist eine vordere, seitlich äußere Kotflügelblende 4.1 (Kotflügelschürze) zur seitlichen Ergänzung der vorderen Kotflügeleinrichtung 10.1 integriert. Außerdem ist in das Seitenverkleidungselement 2 eine hintere Kotflügelblende 4.2 zur seitlichen Ergänzung der hinteren Kotflügeleinrichtung 10.2 integriert. Das Seitenverkleidungselement 2 selbst bildet somit die vordere Kotflügelblende 4.1 und die hintere Kotflügelblende 4.2 aus. Das Seitenverkleidungselement 2 erstreckt sich von der vorderen Kotflügelblende 4.1 bis zu der hinteren Kotflügelblende 4.2 und bildet somit eine Seitenvollverkleidung. Dadurch können Zwischenspalte und folglich Einstellvorrichtungen zur maßlichen Einhaltung der Zwischenspalte vermieden werden.

Ferner sind in das Seitenverkleidungselement 2 zwei Trittstufenöffnungen 5 integriert.

Eine Montageeinrichtung 3 dient zur Montage des Seitenverkleidungselements 2 an das Nutzfahrzeug N und zusätzlich zur Halterung der hinteren Kotflügeleinrichtung 10.2. Die Montageeinrichtung 3 stellt folglich eine Kombihalterung für das Seitenverkleidungselement 2 und die hintere Kotflügeleinrichtung 10.2 dar.

Die hintere Kotflügeleinrichtung 10.2 ist ein vorderes Kotflügelelement (z. B. Kotflügelviertelschale) zur Montage an ein dahinter angeordnetes Kotflügelelement eines mehrteiligen hinteren Kotflügelaufbaus. Der hintere Kotflügelaufbau umfasst das vordere Kotflügelelement 10.2, ein mittleres Kotflügelelement und ein hinteres Kotflügelelement.

Die hintere Kotflügeleinrichtung 10.2 umfasst in deren oberen, hinteren Seitenbereich einen eigenen integrierten Kotflügelblendenstummel 11, wobei die hintere Kotflügeleinrichtung 10.2 in deren vorderen, unteren Seitenbereich abschnittsweise kotflügelblendenfrei ausgeführt ist. Der Kotflügelblendenstummel 11 verläuft von seitlich außen nach innen, so dass Platz geschaffen wird, in dem die hintere Kotflügelblende 4.2, insbesondere deren oberer, reduzierter Eckbereich E, aufgenommen wird. Die hintere Kotflügelblende 4.2 des Seitenverkleidungselements 2, insbesondere der obere reduzierte Eckbereich E, und der Kotflügelblendenstummel 11 der hinteren Kotflügeleinrichtung 10.2 überlappen sich abschnittsweise, so dass ein seitlich geschlossener Kotflügelblendenübergang geschaffen wird.

Die Kotflügelblende 4.2 erstreckt sich über im Wesentlichen die gesamte Rückseitenhöhe des Seitenverkleidungselements 2. Eine Stirnkante S1 der Kotflügelblende 4.2 ist konkav ausgeformt, um sich so der Form eines Nutzfahrzeug-Rads anzupassen.

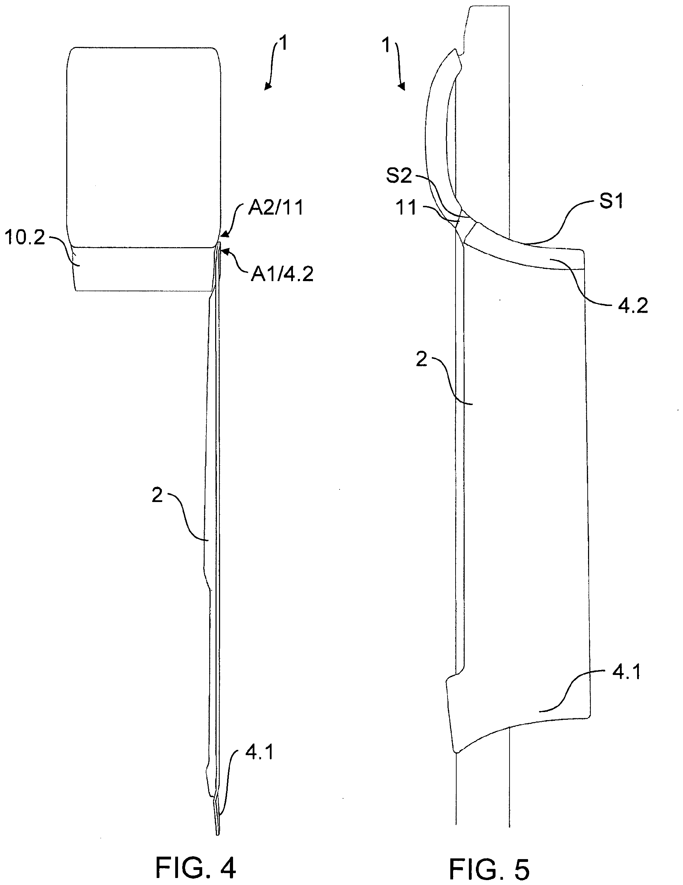

Figur 4 zeigt eine Draufsicht von oben auf das Seitenverkleidungselement 2 und die hintere Kotflügeleinrichtung 10.2.

Eine Außenfläche A1 der hinteren Kotflügelblende 4.2 ist relativ zu einer Außenfläche A2 des Kotflügelblendenstummels 11 zumindest nahezu bündig ausgerichtet.

Figur 5 zeigt eine Seitenansicht auf das Seitenverkleidungselement 2 und die hintere Kotflügeleinrichtung 10.2.

Die Stirnkante S1 der hinteren Kotflügelblende 4.2 ist relativ zu einer Stirnkante S2 des Kotflügelblendenstummels 11 zumindest nahezu bündig ausgerichtet.

Dadurch kann ein optisch einheitlich wirkender Kotflügelblendenverlauf geschaffen werden.

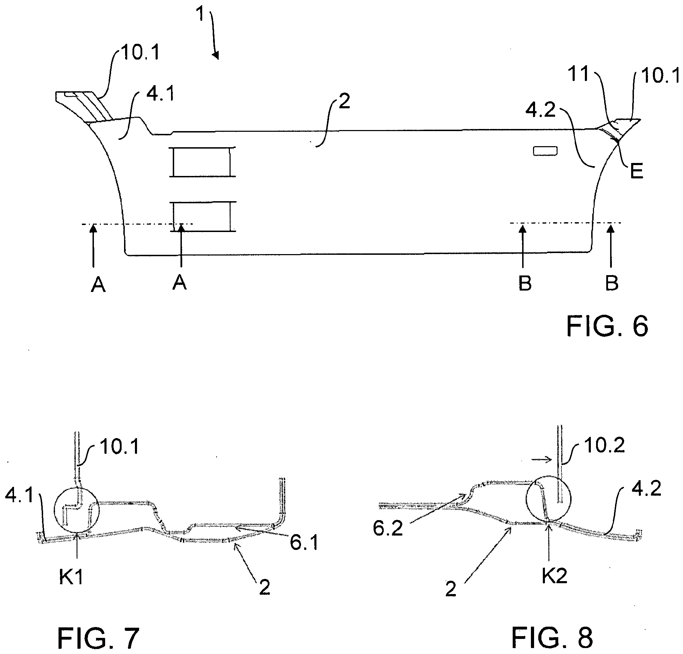

Figur 6 zeigt eine andere Seitenansicht der Seitenverkleidungseinrichtung 1.

Figur 7 zeigt eine Schnittansicht entlang der Linie A-A der Figur 6.

Figur 7 kann insbesondere entnommen werden, dass an das Seitenverkleidungselement 2 ein vorderes Innenelement 6.1 montiert ist, das von dem Seitenverkleidungselement 2 nach innen absteht und zur Ausbildung einer Abdichtkulisse K1 dient, insbesondere mittels Überlappung mit einem Teil der vorderen Kotflügeleinrichtung 10.1. Das vordere Innenelement 6.1 bildet mit dem Seitenverkleidungselement 2 eine vorzugsweise in Umfangsrichtung geschlossene Hohlraumkonstruktion.

Figur 8 zeigt eine Schnittansicht entlang der Linie B-B aus Figur 6.

Figur 8 kann insbesondere entnommen werden, dass an das Seitenverkleidungselement 2 auch ein hinteres Innenelement 6.2 montiert ist, dass von dem Seitenverkleidungselement 2 nach innen absteht und zur Ausbildung einer Abdichtkulisse K2 dient, insbesondere mittels Überlappung mit einem Teil der hinteren Kotflügeleinrichtung 10.2. Auch das hintere Innenelement 6.2 bildet mit dem Seitenverkleidungselement 2 eine vorzugsweise in Umfangsrichtung geschlossene Hohlraumkonstruktion.

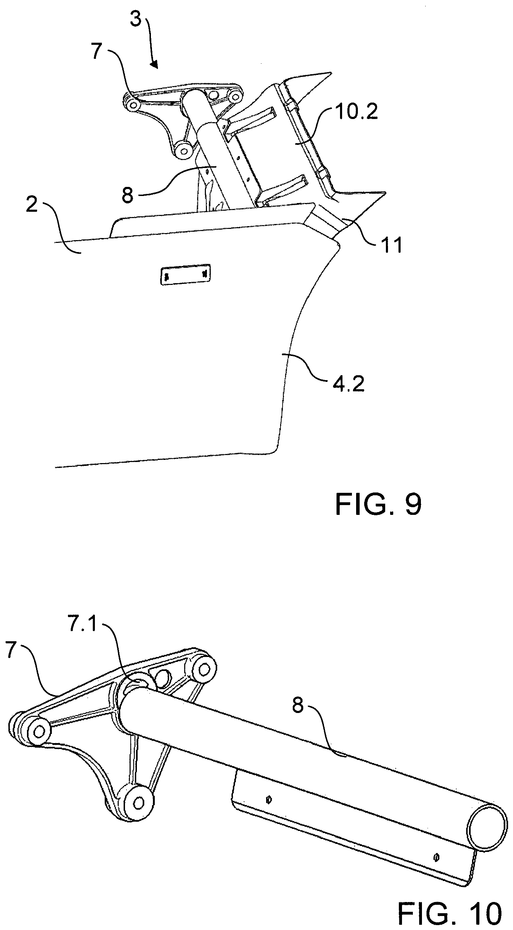

Figur 9 zeigt eine perspektivische Ansicht insbesondere der Montageeinrichtung 3.

Die Montageeinrichtung 3 umfasst eine Lagerkonstruktion (z. B. Schmiedeflansch) 7 und einen daran z. B. durch Reibschweißen montierten Querträger 8 zur Halterung des Seitenverkleidungselements 2 und der hinteren Kotflügeleinrichtung 10.2.

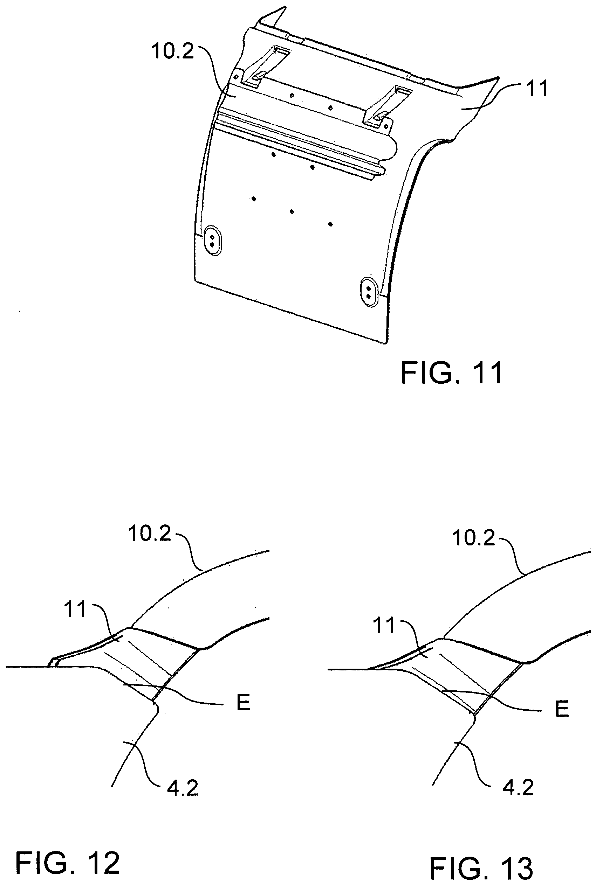

Figur 10 zeigt eine perspektivische Ansicht nur der Lagerkonstruktion 7 und dem Querträger 8, während Figur 11 eine perspektivische Ansicht nur der hinteren Kotflügeleinrichtung 10.2 zeigt.

Die Lagerkonstruktion 7 umfasst zumindest zwei in Höhenrichtung voneinander beabstandete Anbringformationen (z. B. realisierbar durch eine Langlochkonstruktion, ein Löcher umfassendes Lochbild oder eine andere geeignete Anbringstruktur) für den Querträger 8, die der Übersichtlichkeit halber einheitlich mit dem Bezugszeichen 7.1 versehen sind. Der Querträger 7 und somit die hintere Kotflügeleinrichtung 10.2 sind höhenvariabel halterbar, wohingegen das Seitenverkleidungselement 2 durch die Montageeinrichtung 3 höhenkonstant gehaltert bleibt.

Die hintere Kotflügelblende 4.2 und der Kotflügelblendenstummel 11 sind so ausgeführt und angeordnet, dass sie sich abschnittsweise überlappen, unabhängig davon, ob die Montage des Querträgers 8 mit der hinteren Kotflügeleinrichtung 10.2 an die obere Anbringformation 7.1 oder die untere Anbringformation 7.1 erfolgt.

Der hintere Kotflügelaufbau ist dadurch für verschiedene Reifen-/Radgrößen und/oder Sattelkupplungshöhen einsetzbar.

Figur 12 zeigt eine Detailansicht des Übergangsbereichs zwischen der hinteren Kotflügelblende 4.2 und dem Kotflügelblendenstummel 11 in einer ersten Höhenposition, während Figur 13 den Übergangsbereich in einer zweiten Höhenposition zeigt.

In Figur 12 ist der Querträger 8 an die obere Anbringformation 7.1 montiert, so dass die hintere Kotflügeleinrichtung 10.2 nach oben versetzt angeordnet ist.

In Figur 13 ist der Querträger 8 an die untere Anbringformation 7.1 montiert, so dass die hintere Kotflügeleinrichtung 10.2 nach unten versetzt angeordnet ist.

### Bezugszeichenliste

- 1: Seitenverkleidungseinrichtung
- 2: Seitenverkleidungselement
- 3: Montageeinrichtung
- 4.1: Vordere Kotflügelblende
- 4.2: Hintere Kotflügelblende
- 5: Trittstufen-Offnung
- 6.1: Vorderes Innenelement
- 6.2: Hinteres Innenelement
- 7: Lagerkonstruktion
- 8: Querträger
- 10.1: Vordere Kotflügeleinrichtung
- 10.2: Hintere Kotflügeleinrichtung
- 11: Kotflügelblendenstummel
- E: Eckbereich
- N: Nutzfahrzeug
- A1: Außenfläche der hinteren Kotflügelblende
- A2: Außenfläche des Kotflügelblendenstummels
- K1: Abdichtkulisse, vorne
- K2: Abdichtkulisse, hinten
- S1: Stirnkante der hinteren Kotflügelblende
- S2: Stirnkante des Kotflügelblendenstummels

## Patentansprüche

1. Seitenverkleidungseinrichtung (1) zur Montage an ein Nutzfahrzeug (N), mit einem Seitenverkleidungselement (2), einer hinteren Kotflügeleinrichtung (10.1, 10.2) für das Nutzfahrzeug (N) und einer Montageeinrichtung (3) zur Montage des Seitenverkleidungselements (2) an das Nutzfahrzeug (N), wobei in das Seitenverkleidungselement (2) zumindest eine Kotflügelblende (4.1, 4.2) für die Kotflügeleinrichtung (10.1, 10.2) integriert ist, so dass das Seitenverkleidungselement (2) selbst die zumindest eine Kotflügelblende (4.1, 4.2) ausbildet, **dadurch gekennzeichnet, dass** die Montageeinrichtung (3) eine Lagerkonstruktion (7) und einen an der Lagerkonstruktion (7) montierbaren Querträger (8) zur Halterung des Seitenverkleidungselements (2) und der hinteren Kotflügeleinrichtung (10.2) aufweist, wobei die Lagerkonstruktion (7) zumindest eine obere und eine untere Anbringformation (7.1) für den Querträger (8) aufweist, so dass die hintere Kotflügeleinrichtung (10.2) höhenvariabel halterbar ist, wobei die hintere Kotflügelblende (4.2) des Seitenverkleidungselements (2) und ein Kotflügelblendenstummel (11) der hinteren Kotflügeleinrichtung (10.2) sich abschnittsweise überlappen, unabhängig davon, ob die Montage des Querträgers (8) mit der hinteren Kotflügeleinrichtung (10.2) an die untere oder die obere Anbringformation (7.1) erfolgt.

2. Seitenverkleidungseinrichtung (1) nach Anspruch 1, **dadurch gekennzeichnet, dass** in das Seitenverkleidungselement (2) eine hintere Kotflügelblende (4.2) für die hintere Kotflügeleinrichtung (10.2) des Nutzfahrzeugs (N) integriert ist, so dass insbesondere das Seitenverkleidungselement (2) selbst die hintere Kotflügelblende (4.2) ausbildet.

3. Seitenverkleidungseinrichtung (1) nach Anspruch 1 oder 2, **dadurch gekennzeichnet, dass** in das Seitenverkleidungselement (2) eine vordere Kotflügelblende (4.1) für eine vordere Kotflügeleinrichtung (10.1) des Nutzfahrzeugs (N) integriert ist, so dass insbesondere das Seitenverkleidungselement (2) selbst die vordere Kotflügelblende (4.1) ausbildet.

4. Seitenverkleidungseinrichtung (1) nach einem der vorhergehenden Ansprüche, **dadurch gekennzeichnet, dass** das Seitenverkleidungselement (2) sich von der vorderen Kotflügelblende (4.1) bis zu der hinteren Kotflügelblende (4.2) erstreckt und somit insbesondere eine Seitenvollverkleidung bildet.

5. Seitenverkleidungseinrichtung (1) nach einem der vorhergehenden Ansprüche, **dadurch gekennzeichnet, dass** in das Seitenverkleidungselement (2) zumindest eine Trittstufenöffnung (5) integriert ist.

6. Seitenverkleidungseinrichtung (1) nach einem der vorhergehenden Ansprüche, **dadurch gekennzeichnet, dass** das Seitenverkleidungselement (2) ein vorderes Innenelement (6.1) und/oder ein hinteres Innenelement (6.2) umfasst, das von dem Seitenverkleidungselement (2) nach innen absteht und zur Ausbildung einer Abdichtkulisse (K1, K2) dient.

7. Seitenverkleidungseinrichtung (1) nach Anspruch 6, **dadurch gekennzeichnet, dass** das vordere Innenelement (6.1) zusammen mit dem Seitenverkleidungselement (2) eine Hohlraumkonstruktion bildet und/oder das hintere Innenelement (6.2) zusammen mit dem Seitenverkleidungselement (2) eine Hohlraumkonstruktion bildet.

8. Seitenverkleidungseinrichtung (1) nach einem der vorhergehenden Ansprüche, **dadurch gekennzeichnet, dass** eine Stirnkante (S1) der hinteren Kotflügelblende (4.2) konkav und/oder bogenförmig verläuft.

9. Seitenverkleidungseinrichtung (1) nach einem der vorhergehenden Ansprüche, **dadurch gekennzeichnet, dass** die Seitenverkleidungseinrichtung (1) die hintere Kotflügeleinrichtung (10.2) umfasst und die hintere Kotflügeleinrichtung (10.2), vorzugsweise in einem oberen, hinteren Bereich, einen eigenen Kotflügelblendenstummel (11) aufweist und/oder abschnittsweise, vorzugsweise in einem vorderen, unteren Seitenbereich, kotflügelblendenfrei ausgeführt ist.

10. Seitenverkleidungseinrichtung (1) nach Anspruch 9, **dadurch gekennzeichnet, dass** sich die hintere Kotflügelblende (4.2) des Seitenverkleidungselements (2) und der Kotflügelblendenstummel (11) der hinteren Kotflügeleinrichtung (10.2) abschnittsweise überlappen.

11. Seitenverkleidungseinrichtung (1) nach Anspruch 9 oder 10, **dadurch gekennzeichnet, dass** der Kotflügelblendenstummel (11) von seitlich außen nach seitlich innen verläuft, so dass insbesondere Raum für die hintere Kotflügelblende (4.2) geschaffen wird, insbesondere einen oberen, zweckmäßig reduzierten Eckbereich (E) der hinteren Kotflügelblende (4.2).

12. Seitenverkleidungseinrichtung (1) nach einem der Ansprüche 9 bis 11, **dadurch gekennzeichnet, dass** eine Außenfläche (A1) und/oder Stirnkante (S1) der hinteren Kotflügelblende (4.2) des Seitenverkleidungselements (2) relativ zu einer Außenfläche (A2) und/oder Stirnkante (S2) des Kotflügelblendenstummels (11) der hinteren Kotflügeleinrichtung (10.2) zumindest nahezu bündig ausrichtbar ist.

13. Seitenverkleidungseinrichtung (1) nach einem der vorhergehenden Ansprüche, **dadurch gekennzeichnet, dass** die hintere Kotflügeleinrichtung (10.2) ein vorderes Kotflügelelement zur Montage an ein dahinter angeordnetes Kotflügelelement eines mehrteiligen hinteren Kotflügelaufbaus darstellt.

14. Seitenverkleidungseinrichtung (1) nach einem der vorhergehenden Ansprüche, **dadurch gekennzeichnet, dass** sich die hintere Kotflügelblende (4.2) von einem oberen Eckbereich (E) bis zu einem unteren Eckbereich des Seitenverkleidungselements (2) erstreckt.

15. Seitenverkleidungseinrichtung (1) nach einem der vorhergehenden Ansprüche, **dadurch gekennzeichnet, dass** die Montageeinrichtung (3) zusätzlich zur Montage der hinteren Kotflügeleinrichtung (10.2) dient.

16. Nutzfahrzeug (N), vorzugsweise Lastkraftwagen, insbesondere Sattelzugmaschine, mit zumindest einer Seitenverkleidungseinrichtung (1) nach einem der vorhergehenden Ansprüche.

## Claims

1. Side trim device (1) for installation on a utility vehicle (N), having a side trim element (2), having a rear mudguard device (10.1, 10.2) for the utility vehicle (N) and having an installation device (3) for the installation of the side trim element (2) on the utility vehicle (N), wherein at least one mudguard panel (4.1, 4.2) for the mudguard device (10.1, 10.2) is integrated into the side trim element (2) such that the side trim element (2) itself forms the at least one mudguard panel (4.1, 4.2), **characterized in that** the installation device (3) has a bearing structure (7) and a crossmember (8), which can be installed on the bearing structure (7), for holding the side trim element (2) and the rear mudguard device (10.2), wherein the bearing structure (7) has at least one upper and one lower attachment formation (7.1) for the crossmember (8), such that the rear mudguard device (10.2) can be held at a variable height, wherein the rear mudguard panel (4.2) of the side trim element (2) and a mudguard panel stub (11) of the rear mudguard device (10.2) overlap in sections regardless of whether the crossmember (8) together with the rear mudguard device (10.2) is installed on the lower or the upper attachment formation (7.1) .

2. Side trim device (1) according to Claim 1, **characterized in that** a rear mudguard panel (4.2) for a rear mudguard device (10.2) of the utility vehicle (N) is integrated into the side trim element (2), such that, in particular, the side trim element (2) itself forms the rear mudguard panel (4.2).

3. Side trim device (1) according to Claim 1 or 2, **characterized in that** a front mudguard panel (4.1) for a front mudguard device (10.1) of the utility vehicle (N) is integrated into the side trim element (2), such that, in particular, the side trim element (2) itself forms the front mudguard panel (4.1) .

4. Side trim device (1) according to one of the preceding claims, **characterized in that** the side trim element (2) extends from the front mudguard panel (4.1) to the rear mudguard panel (4.2) and thus forms, in particular, a full side trim.

5. Side trim device (1) according to one of the preceding claims, **characterized in that** at least one step opening (5) is integrated into the side trim element (2).

6. Side trim device (1) according to one of the preceding claims, **characterized in that** the side trim element (2) comprises a front inner element (6.1) and/or a rear inner element (6.2) which projects inward from the side trim element (2) and which serves for forming a sealing slot (K1, K2).

7. Side trim device (1) according to Claim 6, **characterized in that** the front inner element (6.1) forms, together with the side trim element (2), a cavity structure, and/or the rear inner element (6.2) forms, together with the side trim element (2), a cavity structure.

8. Side trim device (1) according to one of the preceding claims, **characterized in that** a face edge (S1) of the rear mudguard panel (4.2) runs in concave and/or arcuate fashion.

9. Side trim device (1) according to one of the preceding claims, **characterized in that** the side trim device (1) comprises a rear mudguard device (10.2), and the rear mudguard device (10.2) has a dedicated mudguard panel stub (11) preferably in an upper rear region and/or is formed without a mudguard panel in sections, preferably in a front, lower side region.

10. Side trim device (1) according to Claim 9, **characterized in that** the rear mudguard panel (4.2) of the side trim element (2) and the mudguard panel stub (11) of the rear mudguard device (10.2) overlap in sections.

11. Side trim device (1) according to Claim 9 or 10, **characterized in that** the mudguard panel stub (11) runs from laterally outside to laterally inside, such that, in particular, space is created for the rear mudguard panel (4.2), in particular an upper, expediently reduced corner region (E) of the rear mudguard panel (4.2).

12. Side trim device (1) according to one of Claims 9 to 11, **characterized in that** an outer surface (A1) and/or face edge (S1) of the rear mudguard panel (4.2) of the side trim element (2) can be oriented at least approximately flush relative to an outer surface (A2) and/or face edge (S2) of the mudguard panel stub (11) of the rear mudguard device (10.2).

13. Side trim device (1) according to one of the preceding claims, **characterized in that** the rear mudguard device (10.2) constitutes a front mudguard element for installation on a mudguard element, arranged therebehind, of a multi-part rear mudguard structure.

14. Side trim device (1) according to one of the preceding claims, **characterized in that** the rear mudguard panel (4.2) extends from an upper corner region (E) to a lower corner region of the side trim element (2).

15. Side trim device (1) according to one of the preceding claims, **characterized in that** the installation device (3) additionally serves for the installation of the rear mudguard device (10.2).

16. Utility vehicle (N), preferably heavy goods vehicle, in particular semitrailer tractor, having at least one side trim device (1) according to one of the preceding claims.

## Revendications

1. Système d'habillage latéral (1) destiné à être monté sur un véhicule utilitaire (N), doté d'un élément d'habillage latéral (2), d'un système d'aile arrière (10.1, 10.2) pour le véhicule utilitaire (N) et d'un système de montage (3) destiné à monter l'élément d'habillage latéral (2) sur le véhicule utilitaire (N), dans l'élément d'habillage latéral (2) étant intégré au moins un cache d'aile (4.1, 4.2) pour le système d'aile (10.1, 10.2), de telle sorte que l'élément d'habillage latéral (2) forme lui-même l'au moins un cache d'aile (4.1, 4.2), **caractérisé en ce que** le système de montage (3) comporte une structure de paliers (7) et une traverse (8) montable sur la structure de paliers (7) pour la fixation de l'élément d'habillage latéral (2) et du système d'aile arrière (10.2), la structure de paliers (7) comportant au moins un formage de montage (7.1) supérieur et inférieur pour la traverse (8), de telle sorte que le système d'aile (10.2) arrière puisse être fixé à hauteur variable, le cache d'aile (4.2) arrière de l'élément d'habillage latéral (2) et un moignon de cache d'aile (11) du système d'aile arrière (10.2) se chevauchant par endroits, indépendamment du fait que le montage de la traverse (8) sur le système d'aile arrière (10.2) s'effectue sur le formage de montage (7.1) inférieur ou supérieur.

2. Système d'habillage latéral (1) selon la revendication 1, **caractérisé en ce que** dans l'élément d'habillage latéral (2) est intégré un cache d'aile arrière (4.2) pour le système d'aile arrière (10.2) du véhicule utilitaire (N), de telle sorte que notamment l'élément d'habillage latéral (2) forme lui-même le cache d'aile arrière (4.2) .

3. Système d'habillage latéral (1) selon la revendication 1 ou 2, **caractérisé en ce que** dans l'élément d'habillage latéral (2) est intégré un cache d'aile avant (4.1) pour un système d'aile avant (10.1) du véhicule utilitaire (N), de telle sorte que notamment l'élément d'habillage latéral (2) forme lui-même le cache d'aile avant (4.1).

4. Système d'habillage latéral (1) selon l'une quelconque des revendications précédentes, **caractérisé en ce que** l'élément d'habillage latéral (2) s'étend du cache d'aile avant (4.1) jusqu'au cache d'aile arrière (4.2) et forme ainsi notamment un habillage de côté complet.

5. Système d'habillage latéral (1) selon l'une quelconque des revendications précédentes, **caractérisé en ce que** dans l'élément d'habillage latéral (2) est intégrée au moins une ouverture pour un marchepied (5).

6. Système d'habillage latéral (1) selon l'une quelconque des revendications précédentes, **caractérisé en ce que** l'élément d'habillage latéral (2) comprend un élément interne avant (6.1) et/ou un élément interne arrière (6.2), qui saillit vers l'intérieur à partir de l'élément d'habillage latéral (2) et qui sert à créer une coulisse d'étanchéité (K1, K2).

7. Système d'habillage latéral (1) selon la revendication 6, **caractérisé en ce que** l'élément interne avant (6.1) forme en commun avec l'élément d'habillage latéral (2) une structure de cavité et/ou l'élément interne arrière (6.2) forme en commun avec l'élément d'habillage latéral (2) une structure de cavité.

8. Système d'habillage latéral (1) selon l'une quelconque des revendications précédentes, **caractérisé en ce qu'**une arête frontale (S1) du cache d'aile arrière (4.2) s'écoule sous forme concave et/ou arquée.

9. Système d'habillage latéral (1) selon l'une quelconque des revendications précédentes, **caractérisé en ce que** le système d'habillage latéral (1) comprend le système d'aile arrière (10.2) et le système d'aile arrière (10.2) comporte, de préférence dans une région arrière supérieure, un propre moignon de cache d'aile (11) et/ou par endroits, de préférence dans une zone latérale avant inférieure, est réalisé sans cache d'aile.

10. Système d'habillage latéral (1) selon la revendication 9, **caractérisé en ce que** le cache d'aile arrière (4.2) de l'élément d'habillage latéral (2) et le moignon de cache d'aile (11) du système d'aile arrière (10.2) se chevauchent par endroits.

11. Système d'habillage latéral (1) selon la revendication 9 ou 10, **caractérisé en ce que** le moignon de cache d'aile (11) s'étend de latéralement à l'extérieur vers latéralement à l'intérieur, de sorte à créer notamment de l'espace pour le cache d'aile arrière (4.2), notamment une région angulaire (E) supérieure, opportunément réduite du cache d'aile arrière (4.2) .

12. Système d'habillage latéral (1) selon l'une quelconque des revendications 9 à 11, **caractérisé en ce qu'**une surface extérieure (A1) et/ou une arête frontale (S1) du cache d'aile arrière (4.2) de l'élément d'habillage latéral (2) est orientable au moins approximativement à fleur d'une surface extérieure (A2) et/ou d'une arête frontale (S2) du moignon de cache d'aile (11) du système d'aile arrière (10.2).

13. Système d'habillage latéral (1) selon l'une quelconque des revendications précédentes, **caractérisé en ce que** le système d'aile arrière (10.2) représente un élément d'aile avant destiné à être monté sur un élément d'aile placé derrière lui d'une structure d'aile arrière en plusieurs parties.

14. Système d'habillage latéral (1) selon l'une quelconque des revendications précédentes, **caractérisé en ce que** le cache d'aile arrière (4.2) s'étend d'une région angulaire (E) supérieure jusqu'à une région angulaire inférieure de l'élément d'habillage latéral (2).

15. Système d'habillage latéral (1) selon l'une quelconque des revendications précédentes, **caractérisé en ce que** le système de montage (3) sert en sus à monter le système d'aile arrière (10.2) .

16. Véhicule utilitaire (N), de préférence camion, notamment tracteur de semi-remorque, équipé d'au moins un système d'habillage latéral (1) selon l'une quelconque des revendications précédentes.
